# EUROPÄISCHE PATENTSCHRIFT

(11) **EP 2 812 891 B1**
(45) Veröffentlichungstag und Bekanntmachung des Hinweises auf die Patenterteilung: **13.03.2019**
(21) Anmeldenummer: 12816047.0
(22) Anmeldetag: 17.12.2012
(51) Int. Cl.: G08G 1/0967, G01C 21/34, G06Q 50/00, G08G 1/00, G08G 1/16

(54) **VERFAHREN UND VORRICHTUNG ZUR GEMEINSCHAFTSBASIERTEN NAVIGATION**
METHOD AND DEVICE FOR COMMUNITY-BASED NAVIGATION
PROCÉDÉ ET DISPOSITIF DE NAVIGATION COMMUNAUTAIRE

(30) Priorität: 10.02.2012 DE 102012201982
(43) Veröffentlichungstag der Anmeldung: 17.12.2014
(73) Patentinhaber: Robert Bosch GmbH, 70442 Stuttgart (DE)
(72) Erfinder: FUEHRER, Thomas, 70499 Stuttgart-Weilimdorf (DE)
(86) Internationale Anmeldenummer: PCT/EP2012/075769
(87) Internationale Veröffentlichungsnummer: WO 2013/117279

(56) Entgegenhaltungen:
- WO-A1-2011/013216
- DE-A1- 10 131 839
- DE-A1- 10 348 635
- US-A1- 2010 060 482

## Beschreibung

Zur Navigation eines Verkehrsteilnehmers von einer gegenwärtigen Position zu einer vorgegebenen Zielposition sind unterschiedliche Navigationssysteme bekannt. Dabei wird üblicherweise die gegenwärtige Position des Verkehrsteilnehmers bestimmt und auf der Basis von Verkehrswiderständen auf Abschnitten eines Wegenetzes, auf dem sich der Verkehrsteilnehmer befindet, eine möglichst vorteilhafte Route für den Verkehrsteilnehmer bestimmt und ausgegeben. Zur Bestimmung der Route können auch aktuelle Verkehrsinformationen, beispielsweise bezüglich eines temporären Verkehrshindernisses, verarbeitet werden. Üblicherweise umfasst der Verkehrsteilnehmer ein Kraftfahrzeug, insbesondere ein Personenkraftfahrzeug.

Eine Bestimmungseinrichtung zur Bestimmung der Route kann an Bord des Kraftfahrzeugs oder an einer zentralen Stelle vorgesehen sein. In ersterem Fall können die aktuellen Verkehrsinformationen drahtlos zum Verkehrsteilnehmer übertragen werden, in letzterem Fall kann die Beschaffung von aktuellen Verkehrsinformationen auf beliebige Weise erfolgen und eine Übermittlung zwischen dem Verkehrsteilnehmer und der zentralen Bestimmungseinrichtung erfolgt üblicherweise drahtlos.

Tritt eine Verkehrsstörung auf, so ist der Verkehrsfluss im Bereich der Verkehrsstörung üblicherweise schwer vorhersagbar. Insbesondere ein Verkehrsaufkommen im kleinen und kleinsten Raum um die Verkehrsbehinderung kann von den individuellen Entscheidungen der Fahrer der von der Verkehrsbehinderung betroffenen Kraftfahrzeuge beeinflusst sein, wobei unbekannt ist, welche Informationsbasis diesen Fahrern zur Verfügung steht.

US 2010/0060482 A1 betrifft eine automatisierte Verkehrssynchronisation, bei der Fahrmanöver von Mitgliedern einer Gruppe von Verkehrsteilnehmern in abhängigkeit eines Verkehrsregelungssystems synchronisiert werden.

WO 2011/013216 A1 betrifft eine Technik zur Fahrzeugsteuerung, wobei Abstände benachbarter Fahrzeuge so gesteuert werden, dass ein Verkehrsstau besser als bei individueller Steuerung der Fahrzeuge vermieden werden kann.

Es ist daher Aufgabe der vorliegenden Erfindung, ein Verfahren und eine Vorrichtung zur gemeinschaftsbasierten Navigation bereitzustellen. Die Erfindung löst diese Aufgabe mittels eines Verfahrens und einer Vorrichtung mit den Merkmalen der unabhängigen Ansprüche.

### Offenbarung der Erfindung

Die Erfindung wird durch die Merkmale der Ansprüche definiert. Ein erfindungsgemäßes Verfahren zur Navigation von Verkehrsteilnehmern im Bereich einer Verkehrsbehinderung umfasst Schritte des Bestimmens einer Gruppe von Verkehrsteilnehmern im Bereich der Verkehrsbehinderung, die Teilnehmer eines vorbestimmten Diensts sind, des Erfassens von Fahrinformationen der Mitglieder der Gruppe, des Bestimmens von Fahrmanövern für die Mitglieder der Gruppe auf der Basis der erfassten Fahrinformationen und das Ausgebens der Fahrmanöver an die zugeordneten Mitglieder der Gruppe. Dabei sind die bestimmten Fahrmanöver aufeinander abgestimmt, um die Auswirkungen der Verkehrsbehinderung für die Mitglieder der Gruppe zu reduzieren, um das Problem der Verkehrsbehinderung durch gruppenorientiertes Handeln für alle Mitglieder der Gruppe bestmöglich zu lösen.

Die Teilnehmer des vorbestimmten Diensts, die gewissermaßen eine virtuelle Gruppe bilden, können auf die beschriebene Weise eine reale Gruppe bilden, deren Fahrmanöver im Sinne eines kollektiven Vorteils aufeinander abgestimmt sind. Es ist bekannt, dass der insgesamte Nutzen für alle Mitglieder einer Gruppe bei gruppenorientiertem Handeln jedes einzelnen Mitglieds allgemein höher ist als bei einem individualbasierten Handeln jedes einzelnen Mitglieds. Die Mitglieder der Gruppe können dazu angeleitet werden, das Problem der Verkehrsbehinderung für alle Mitglieder der Gruppe bestmöglich zu lösen. Eine durchschnitt-liche Behinderung für jedes Mitglied der Gruppe kann dadurch reduziert sein. Es kann auch ein positiver Effekt auf Verkehrsteilnehmer ausgehen, die nicht Mitglieder der Gruppe sind. Eine gesamte Verkehrsbelastung im Bereich der Verkehrsbehinderung kann dadurch reduziert sein.

Gemäß der Erfindung, werden die Fahrmanöver derart bestimmt, dass Fahrgeschwindigkeiten der Mitglieder der Gruppe aneinander angenähert werden. Ein wiederholtes Beschleunigen und Verzögern der Mitglieder der Gruppe, das unnötigen Energieverbrauch nach sich ziehen kann, kann dadurch verhindert werden. Insbesondere kann durch dieses Verhalten ein beruhigender Effekt auf alle Verkehrsteilnehmer im Bereich der Verkehrsbehinderung ausgehen, so dass sich eine erhöhte Durchschnittsgeschwindigkeit der Verkehrsteilnehmer bei geringerer Abweichung vom Durchschnitt einstellen kann.

Die Fahrmanöver werden auch derart bestimmt, dass Abstände zwischen den Mitgliedern der Gruppe auf einen vorbestimmten Höchstabstand reduziert werden. Die Gruppe kann dadurch eine vorbestimmte Größe entlang einer Fahrbahn nicht überschreiten. Dadurch ist es einfacher, die Fahrmanöver für die Mitglieder der Gruppe aufeinander abzustimmen. Außerdem können Verkehrsteilnehmer, die nicht Teilnehmer des vorbestimmten Dienstes sind, auf diese Weise aus der real gebildeten Gruppe verdrängt werden, wodurch die reale Gruppe einfacher zu beeinflussen sein kann.

Außer der Beeinflussung einer Fahrgeschwindigkeit bzw. einer Beschleunigung oder Verzögerung der Mitglieder der Gruppe können auch andere Manöver, wie ein Spurwechsel oder ein Abbiegevorgang, etwa zur Nutzung einer Ausweichstrecke oder zum grüppchenweise Überholen, zwischen den Mitgliedern der Gruppe koordiniert sein.

In einer besonders bevorzugten Ausführungsform umfasst der vorbestimmte Dienst ein soziales Netzwerk. Das soziale Netzwerk kann insbesondere zur gruppenbasierten Verkehrsführung bereitgestellt sein. Teilnehmern dieses Netzwerks kann auf die beschriebene Weise ein deutlicher Zusatznutzen zuteil werden. Ein derartiges Netzwerk ist unter dem Namen WAZE bekannt. Ein solches Netzwerk kann seine Daten und Informationen, auf deren Basis Navigationslösungen für Anwender bestimmt werden, von den Anwendern während deren Nutzung des Dienstes erhalten.

Die Bestimmung der Fahrmanöver kann durch eine von den Verkehrsteilnehmern separate Einrichtung durchgeführt werden. Insbesondere kann die Bestimmung durch eine zentrale Instanz oder durch einen zentralen Dienst bestimmt werden. Der zentrale Dienst kann Cloud-basiert sein, so dass es unerheblich ist, an welchem konkreten Ort eine Ausführungsinstanz angeordnet ist. Durch die zentrale Bestimmung kann ein Kommunikationsaufwand zwischen den Mitgliedern der Gruppe minimiert sein. Insbesondere kann bei n Mitgliedern eine Kommunikation zwischen den n x n Mitgliedern vermieden werden. Dadurch kann eine zur Verfügung stehende Bandbreite eingespart und eine Ausführungsgeschwindigkeit des Verfahrens gesteigert sein.

Die Fahrmanöver können derart bestimmt werden, dass die Mitglieder der Gruppe im Bereich einer Fahrspurverengung nach Reißverschlussart von der betroffenen Fahrspur geführt werden. Das Reißverschlussverfahren, das bei Fahrspurverengungen üblich ist und dessen Durchführung häufig zu Meinungsverschiedenheiten zwischen den Verkehrsteilnehmern führt, kann dadurch verbessert ausgeführt werden. Ein Verkehrsfluss kann dadurch beschleunigt werden und Abstimmungsschwierigkeiten zwischen den Verkehrsteilnehmern können reduziert sein.

In einer Ausführungsform umfasst einer der Verkehrsteilnehmer ein Kraftfahrzeug und die Fahrmanöver werden derart ausgegeben, dass das Kraftfahrzeug die Fahrmanöver automatisch einleitet. Dies kann insbesondere im Zusammenhang mit einem bestehenden Assistenten zur Unterstützung des Fahrers erfolgen. Der Assistent kann beispielsweise einen Geschwindigkeitsassistenten mit optionaler Abstandshaltung oder einen Fahrspurassistenten umfassen, die aktiv in ein Fahrverhalten des Kraftfahrzeugs eingreifen können. Ein Aufwand zur Implementation des Verfahrens kann durch diese Integration gesenkt werden. Außerdem kann durch die Integration mit einem bestehenden Assistenten eine Akzeptanz des Fahrers des Kraftfahrzeugs gegenüber dem beschriebenen Verfahren gesteigert sein.

In einer Ausführungsform kann bestimmt werden, dass die Anzahl der Mitglieder der Gruppe einen vorbestimmten Wert übersteigt und die Mitglieder können zu voneinander unabhängigen Teilgruppen zugeordnet werden, wobei das Verfahren jeweils auf den Teilgruppen weiter ausgeführt wird. Ein Anwachsen der Mitgliederzahl auf eine Größe, die nicht mehr effizient behandelt werden kann, kann somit vermieden werden. Die entstandenen Gruppen können einzeln durch den Bereich der Verkehrsbehinderung geführt werden, wodurch eine gegenseitige negative Beeinflussung der Verkehrsteilnehmer vermieden werden kann.

Ein Mitglied der Gruppe, dessen Fahrgeschwindigkeit einen vorbestimmten Wert übersteigt, kann aus der Gruppe entlassen werden. Durch diese Vorgehensweise kann letztlich auch die gesamte Gruppe aufgelöst werden, sobald die Verkehrsbehinderung nicht mehr vorliegt.

Ein Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist. Mittels des Computerprogrammprodukts kann insbesondere eine Navigationseinrichtung an Bord eines Kraftfahrzeugs in die Lage versetzt werden, das beschriebene Verfahren durchzuführen.

Eine Vorrichtung zur Navigation eines Verkehrsteilnehmers im Bereich einer Verkehrsbehinderung umfasst eine Bestimmungseinrichtung zur Bestimmung, dass der Verkehrsteilnehmer Teilnehmer eines vorbestimmten Diensts ist und zur Zuordnung des Verkehrsteilnehmers zu einer Gruppe solcher Verkehrsteilnehmer, eine Erfassungseinrichtung zur Erfassung von Fahrinformationen des Verkehrsteilnehmers, eine Bestimmungseinrichtung zum Bestimmen von aufeinander abgestimmten Fahrmanövern für die Mitglieder der Gruppe auf der Basis der erfassten Fahrinformationen, um die Auswirkungen der Verkehrsbehinderung für die Mitglieder der Gruppe zu reduzieren, und eine Ausgabeeinrichtung zur Ausgabe der für den Verkehrsteilnehmer bestimmten Fahrmanöver an den Verkehrsteilnehmer, um das Problem der Verkehrsbehinderung durch gruppenorientiertes Handeln für alle Mitglieder der Gruppe bestmöglich zu lösen.

Die Erfindung wird nun mit Bezug auf die beigefügten Figuren genauer beschrieben, in denen:
- Figur 1: eine Vorrichtung und ein System zur gemeinschaftsbasierten Navigation;
- Figur 2: eine Verkehrssituation zur Erläuterung der gemeinschaftsbasierten Navigation; und
- Figur 3: ein Ablaufdiagramm eines Verfahrens zur gemeinschaftsbasierten Navigation
darstellt.

### Genaue Beschreibung von Ausführungsbeispielen

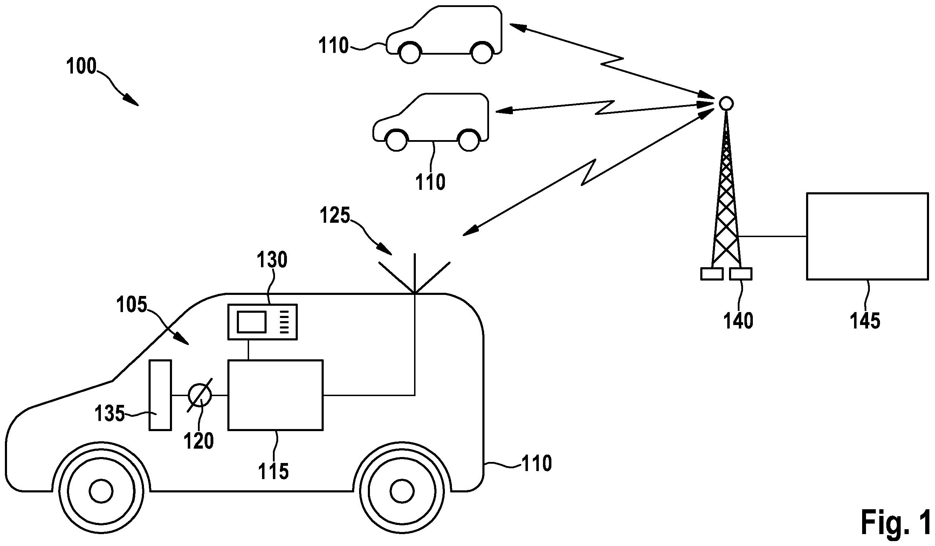

Figur 1 zeigt ein System 100 und eine Vorrichtung 105 zur gemeinschafts- oder gruppenbasierten Navigation.

Die Vorrichtung 105 ist an Bord eines Kraftfahrzeugs 110 angebracht. Die Vorrichtung 105 umfasst eine Verarbeitungseinrichtung 115, eine Schnittstelle 120, eine Kommunikationseinrichtung 125 und eine Benutzerschnittstelle 130. Die Verarbeitungseinrichtung 115 ist mit der Schnittstelle 120, der Kommunikationseinrichtung 125 und der Benutzerschnittstelle 130 verbunden. Die Schnittstelle 120 führt zu einer Steuereinrichtung 135 des Kraftfahrzeugs 110.

In einer Ausführungsform ist die Steuereinrichtung 135 dazu eingerichtet, über die Schnittstelle 120 Fahrinformationen des Kraftfahrzeugs 110, insbesondere eine aktuelle Position, eine Geschwindigkeit, eine Beschleunigung, ein Fahrziel oder ein bevorstehendes Fahrmanöver bereitzustellen. Dabei kann die Steuereinrichtung 135 ein Navigationssystem, insbesondere ein Satellitennavigationssystem umfassen. In einer Ausführungsform können die Verarbeitungseinrichtung 115 und die Steuereinrichtung 135 auch integriert ausgeführt sein bzw. zusammen fallen.

Die Steuereinrichtung 135 kann dazu eingerichtet sein, Befehle über die Schnittstelle 120 entgegenzunehmen und eine Bewegung des Kraftfahrzeugs 110 in Abhängigkeit der Befehle unmittelbar zu beeinflussen. Die Beeinflussung kann insbesondere eine Geschwindigkeit, eine Beschleunigung bzw. Verzögerung oder eine Richtungssteuerung des Kraftfahrzeugs 110 betreffen. In einer Ausführungsform sind zwei Steuereinrichtungen 135 vorgesehen, wobei die Steuereinrichtung 135 zur Bereitstellung von Fahrinformationen von der Steuereinrichtung 135 zur Entgegennahme von Befehlen separat ausgeführt ist. In einer weiteren Ausführungsform kann die Verarbeitungseinrichtung 115 mit einer der beiden Steuereinrichtung 135 integriert ausgeführt sein bzw. zusammen fallen.

Die Benutzerschnittstelle 130 kann beliebige, übliche Elemente zur Interaktion mit einem Benutzer aufweisen, insbesondere eine optische, akustische oder haptische Ein- bzw. Ausgabe. Beim Benutzer handelt es sich üblicherweise um einen Fahrer des Kraftfahrzeugs 110. Die Verarbeitungseinrichtung 115 kann dazu eingerichtet sein, eine Ausgabe über die Schnittstelle 120 und/oder die Benutzerschnittstelle 130 zu tätigen.

Das System 100 umfasst mehrere Kraftfahrzeuge 110, die jeweils mit einer Vorrichtung 105 ausgestattet sind, eine Kommunikationseinrichtung 140 zur drahtlosen Kommunikation mit den Kommunikationseinrichtungen 125 sowie eine zentrale Verarbeitungseinrichtung 145. Die zentrale Verarbeitungseinrichtung 145 kann durch einen Dienst in einem Netzwerk, insbesondere durch einen Cloudbasierten Dienst ersetzt sein. Obwohl grundsätzlich beliebige Kraftfahrzeuge 110 mit der zentralen Kommunikationseinrichtung 140 kommunizieren können, ist es vorteilhaft, Gegebenheiten der Kommunikationseinrichtung 140 auszunutzen, um gezielt solche Kraftfahrzeuge 110 gemeinsam anzusprechen, die sich räumlich nahe beieinander befinden. Beispielsweise kann die Kommunikationseinrichtung 140 eine Funkzelle eines zellbasierten Telefonnetzes umfassen und die Kraftfahrzeuge 110 können sich innerhalb der Funkzelle aufhalten.

Die zentrale Kommunikationseinrichtung 140 zusammen mit der zentralen Verarbeitungseinrichtung 145 kann zum Austauschen von Informationen, insbesondere Fahrinformationen, zwischen den Kraftfahrzeugen 110 eingerichtet sein. In diesem Fall kann an Bord jedes einzelnen Kraftfahrzeugs 110 mittels der Verarbeitungseinrichtung 115 auf der Basis der Fahrinformationen der anderen Kraftfahrzeuge 110 ein Fahrmanöver zum Führen des Kraftfahrzeugs 110 bestimmt werden.

In einer anderen Ausführungsform werden die Bestimmungen der Fahrmanöver für alle Kraftfahrzeuge 110 zentral durch die Verarbeitungseinrichtung 145 durchgeführt.

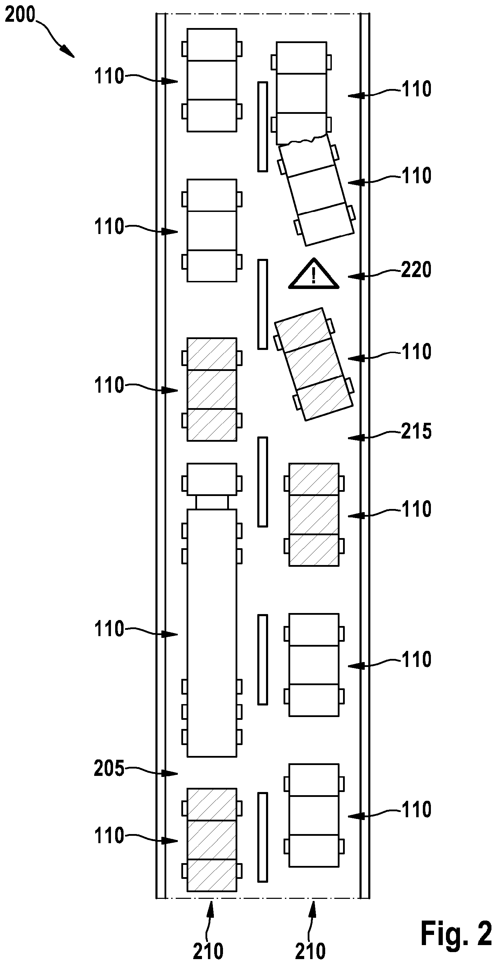

Figur 2 zeigt eine Verkehrssituation 200 zur Erläuterung der gemeinschaftsbasierten Navigation, die mittels der Vorrichtung 105 und dem System 100 aus Figur 1 durchführbar sind. Auf einer Fahrstraße 205 mit zwei Fahrspuren 210 befindet sich eine Vielzahl Kraftfahrzeuge 110. Dabei sind die dunkel dargestellten Kraftfahrzeuge 110 Mitglieder einer Gruppe 200. Eine Verkehrsbehinderung 220 besteht im oberen Bereich der rechten Fahrspur 210, wo zwei Kraftfahrzeuge 110 nach einem Unfall fahrunfähig sind. Die Kraftfahrzeuge 110 der Gruppe 215 erhalten Hinweise auf Fahrmanöver, wobei die Fahrmanöver derart aufeinander abgestimmt sind, dass das Fortkommen der Kraftfahrzeuge 110 der Gruppe 215 an der Verkehrsbehinderung 220 vorbei kollektiv verbessert ist. Dazu werden die Fahrmanöver auf der Basis von Fahrinformationen der einzelnen Kraftfahrzeuge 110 der Gruppe 215 aufeinander abgestimmt. Die Bestimmung der Fahrmanöver ist oben mit Bezug auf Figur 1 genauer erläutert.

Die Fahrmanöver können beispielsweise so bestimmt werden, dass die Kraftfahrzeuge 110, die Mitglieder der Gruppe 215 sind, möglichst unmittelbar hintereinander bzw. nebeneinander fahren. In einer Ausführungsform können die in unmittelbarer Nachbarschaft fahrenden Kraftfahrzeuge 110 prinzipiell wie ein einziges, großes Kraftfahrzeug 110 aufgefasst werden, das mittels der Fahrmanöver über die Fahrstraße 205 navigiert wird. Es sind jedoch auch andere Verhaltensweisen möglich. Beispielsweise kann ein Zusammenführen der Verkehrsströme der beiden Fahrspuren 210 im Bereich der Verkehrsbehinderung 220 nach dem Reißverschlussprinzip erleichtert durchgeführt werden, wenn die Mitglieder der Gruppe 215 vor der Verkehrsbehinderung 220 möglichst unmittelbar nebeneinander bzw. voreinander herfahren.

Um die Gruppe 215 möglichst geschlossen zu halten, kann beispielsweise einem vom Rest der Gruppe 215 entfernten Mitglied 110, wie es unten links dargstellt ist, eine Serie von Fahrmanövern vorgeschlagen werden, die dieses Kraftfahrzeug 110 näher an die restliche Gruppe 215 bringen.

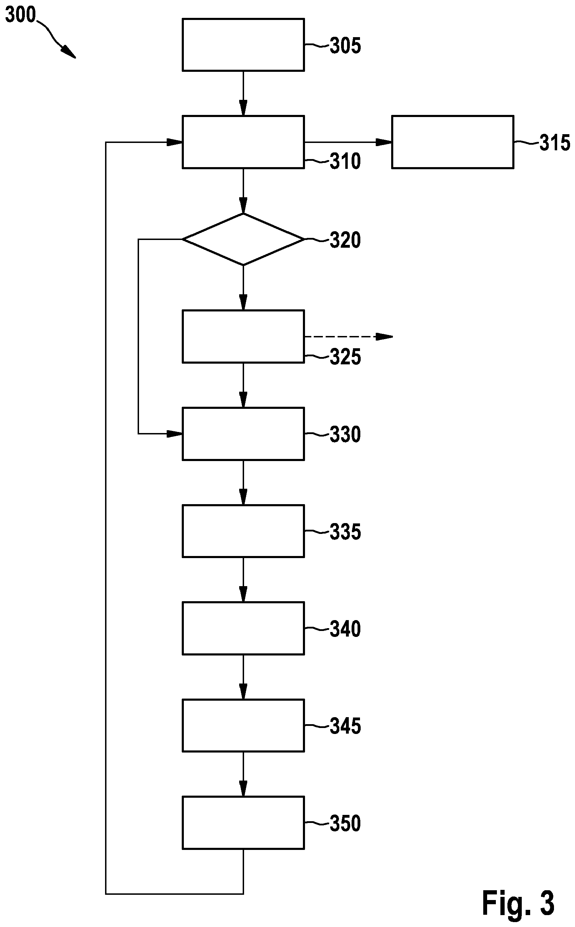

Figur 3 zeigt ein Ablaufdiagramm eines Verfahrens 300 zur gemeinschaftsbasierten Navigation, wie sie oben mit Bezug auf die Figuren 1 und 2 erläutert wurde. Dabei kann das Verfahren 300 auf einer zentralen Verarbeitungseinrichtung 145 oder verteilt auf mehreren Verarbeitungseinrichtungen 115 an Bord mehrerer Kraftfahrzeuge 110 ausgeführt werden.

In einem ersten Schritt 305 werden Positionen von Kraftfahrzeugen 110 bestimmt, die Mitglieder einer Gruppe 215 sind. Die Gruppe 215 ist dadurch definiert, dass sich ihre Mitglieder in einem vorbestimmten Bereich eines Verkehrshindernis 220 befinden und dass sie bzw. die sie führenden Fahrer Mitglieder eines sozialen Netzwerks sind, das vorzugsweise zum Austausch von navigationsbasierten Informationen besteht.

In einem folgenden Schritt 310 wird die Gruppe 215 nach den beschriebenen Kriterien gebildet. Sollte sich ein Kraftfahrzeug 110, das bzw. dessen Fahrer Teilnehmer des sozialen Netzwerks ist, nicht nahe genug am Rest der Gruppe 215 befinden, so kann in einem Schritt 315 eine Einladung an dieses Kraftfahrzeug 110 versendet werden. Die Einladung kann eines oder mehrere Fahrmanöver zum Erreichen der restlichen Gruppe 215 umfassen. Für das einzelnen Kraftfahrzeug 110 wird das Verfahren 300 an dieser Stelle nicht mehr fortgeführt, bis es in die Gruppe 215 aufgenommen werden kann.

Für die restlichen Mitglieder der Gruppe 215 fährt das Verfahren 300 in einem Schritt 320 fort, in dem bestimmt wird, ob die Gruppe eine vorbestimmte Größe überschritten hat. Dazu kann bestimmt werden, ob die Anzahl der Mitglieder der Gruppe 215 einen vorbestimmten Wert übersteigt. Ist die Gruppe zu groß, so kann sie in einem Schritt 325 in mehrere Teilgruppen aufgeteilt werden. Das Verfahren 300 kann dann für jede Teilgruppe einzeln inkarniert werden, wobei die einzelnen Inkarnationen des Verfahrens 300 voneinander unabhängig durchgeführt werden können.

Besteht kein Grund zum Aufteilen der Gruppe oder ist die Gruppe bereits aufgeteilt, so werden in einem Schritt 330 Fahrinformationen der teilnehmenden Kraftfahrzeuge 110 bestimmt. Diese Fahrinformationen können bereits in Form der im Schritt 305 bestimmten Positionen der teilnehmen Kraftfahrzeuge 110 vorliegen. Vorzugsweise umfassen die Fahrinformationen jedoch noch weitere Informationen, insbesondere Geschwindigkeiten, Beschleunigungen, erreichbare Höchstgeschwindigkeiten oder Reiseziele.

Optional kann in einem Schritt 335, der auch zu einem anderen Zeitpunkt ausgeführt werden kann, bestimmt werden, welche Art von Verkehrsbehinderung 220 vorliegt. Ferner kann in einem ebenfalls optionalen Schritt 340 eine weitere Verkehrslage im Bereich der Verkehrsbehinderung 220 bestimmt werden.

Auf der Basis der bestimmten Informationen werden in einem Schritt 345 aufeinander abgestimmte Fahrmanöver für die Kraftfahrzeuge 110 bestimmt, die Teilnehmer der Gruppe 215 sind. Anschließend werden die Fahrmanöver in einem Schritt 350 an die einzelnen Kraftfahrzeuge 110 ausgegeben, wobei vorzugsweise jedes Kraftfahrzeug 110 nur dasjenige Fahrmanöver erhält, das für dieses Kraftfahrzeug 110 bestimmt wurde.

## Patentansprüche

1. Verfahren (300) zur Navigation von Verkehrsteilnehmern (110) im Bereich einer Verkehrsbehinderung (220), folgende Schritte umfassend:
- Bestimmen (310) einer Gruppe (215) von Verkehrsteilnehmern (110) im Bereich der Verkehrsbehinderung (220), die Teilnehmer eines vorbestimmten Diensts sind;
- Erfassen (330) von Fahrinformationen der Mitglieder (110) der Gruppe (215);
- Bestimmen (345) von Fahrmanövern für die Mitglieder (110) der Gruppe (215) auf der Basis der erfassten Fahrinformationen;
- Ausgeben (350) der Fahrmanöver an die zugeordneten Mitglieder (110) der Gruppe (215);
- wobei die Fahrmanöver aufeinander abgestimmt sind, um die Auswirkungen der Verkehrsbehinderung (220) für die Mitglieder (110) der Gruppe (215) zu reduzieren; wobei
- die Fahrmanöver derart bestimmt werden, dass Fahrgeschwindigkeiten der Mitglieder (110) der Gruppe (215) aneinander angenähert werden; und **dadurch gekennzeichnet, dass**
- die Fahrmanöver derart bestimmt werden, dass Abstände zwischen den Mitgliedern (110) der Gruppe (215) auf einen vorbestimmten Höchstabstand reduziert werden.

2. Verfahren (300) nach einem der vorangehenden Ansprüche, wobei der vorbestimmte Dienst ein soziales Netzwerk umfasst.

3. Verfahren (300) nach Anspruch 2, wobei der vorbestimmte Dienst ein soziales Netzwerk zur gruppenbasierten Verkehrsführung umfasst.

4. Verfahren (300) nach einem der vorangehenden Ansprüche, wobei die Bestimmung (345) der Fahrmanöver durch eine von den Verkehrsteilnehmern (110) separate Einrichtung (145) durchgeführt wird.

5. Verfahren (300) nach Anspruch 4, wobei die Fahrmanöver durch einen verteilten Bestimmungsdienst (145) bestimmt werden.

6. Verfahren (300) nach einem der vorangehenden Ansprüche, wobei die Fahrmanöver derart bestimmt werden, dass die Mitglieder (110) der Gruppe (215) im Bereich einer Fahrspurverengung (220) nach Reißverschlussart von der betroffenen Fahrspur (210) geführt werden.

7. Verfahren (300) nach einem der vorangehenden Ansprüche, wobei einer der Verkehrsteilnehmer ein Kraftfahrzeug umfasst und die Fahrmanöver derart ausgegeben werden, dass das Kraftfahrzeug die Fahrmanöver automatisch einleitet.

8. Verfahren (300) nach einem der vorangehenden Ansprüche, ferner umfassend ein Bestimmen (320), dass die Anzahl der Mitglieder der Gruppe (215) einen vorbestimmten Wert übersteigt, ein Zuordnen der Mitglieder (110) zu voneinander unabhängigen Teilgruppen (215) und ein Ausführen des Verfahrens (300) jeweils auf den Teilgruppen (215).

9. Verfahren (300) nach einem der vorangehenden Ansprüche, wobei ein Mitglied (110), dessen Fahrgeschwindigkeit einen vorbestimmten Wert übersteigt, aus der Gruppe (215) entlassen wird.

10. Computerprogrammprodukt mit Programmcodemitteln zur Durchführung des Verfahrens (300) nach einem der vorangehenden Ansprüche, wenn das Computerprogrammprodukt auf einer Verarbeitungseinrichtung (110, 140) abläuft oder auf einem computerlesbaren Datenträger gespeichert ist.

11. Vorrichtung (105) zur Navigation eines Verkehrsteilnehmers (110) im Bereich einer Verkehrsbehinderung (220), umfassend:
- eine Bestimmungseinrichtung (115, 140) zur Bestimmung, dass der Verkehrsteilnehmer (110) Teilnehmer eines vorbestimmten Diensts ist und zur Zuordnung des Verkehrsteilnehmers (110) zu einer Gruppe (215) solcher Verkehrsteilnehmer (110);
- eine Erfassungseinrichtung (120) zur Erfassung von Fahrinformationen des Verkehrsteilnehmers (110);
- eine Bestimmungseinrichtung (115) zum Bestimmen von aufeinander abgestimmten Fahrmanövern für die Mitglieder (110) der Gruppe (215) auf der Basis der erfassten Fahrinformationen, um die Auswirkungen der Verkehrsbehinderung (220) für die Mitglieder (110) der Gruppe (215) zu reduzieren; und
- eine Ausgabeeinrichtung (120, 130) zur Ausgabe der für den Verkehrsteilnehmer (110) bestimmten Fahrmanöver an den Verkehrsteilnehmer (110);
- die Fahrmanöver derart bestimmbar sind, dass Fahrgeschwindigkeiten der Mitglieder (110) der Gruppe (215) aneinander annäherbar sind; und
**dadurch gekennzeichnet, dass** die Fahrmanöver derart bestimmbar sind, dass Abstände zwischen den Mitgliedern (110) der Gruppe (215) auf einen vorbestimmten Höchstabstand reduzierbar sind.

## Claims

1. Method (300) for navigation for road users (110) in the area of a traffic hold-up (220), comprising the following steps:
- determining (310) a group (215) of road users (110) in the area of the traffic hold-up (220) that are subscribers to a predetermined service;
- capturing (330) driving information of the members (110) of the group (215);
- determining (345) driving manoeuvres for the members (110) of the group (215) on the basis of the captured driving information;
- outputting (350) the driving manoeuvres to the associated members (110) of the group (215);
- wherein the driving manoeuvres are coordinated in order to reduce the effects of the traffic hold-up (220) for the members (110) of the group (215); wherein
- the driving manoeuvres are determined such that speeds of travel of the members (110) of the group (215) are brought move into line with one another;
and **characterized in that**
- the driving manoeuvres are determined such that distances between the members (110) of the group (215) are reduced to a predetermined maximum distance.

2. Method (300) according to one of the preceding claims, wherein the predetermined service comprises a social network.

3. Method (300) according to Claim 2, wherein the predetermined service comprises a social network for group-based traffic management.

4. Method (300) according to one of the preceding claims, wherein the determination (345) of the driving manoeuvres is performed by a device (145) that is separate from the road users (110).

5. Method (300) according to Claim 4, wherein the driving manoeuvres are determined by a distributed determination service (145).

6. Method (300) according to one of the preceding claims, wherein the driving manoeuvres are determined such that the members (110) of the group (215) are guided from the affected lane (210) in the style of a zip fastener in the area of a lane restriction (220) .

7. Method (300) according to one of the preceding claims, wherein one of the road users comprises a motor vehicle and the driving manoeuvres are output such that the motor vehicle initiates the driving manoeuvres automatically.

8. Method (300) according to one of the preceding claims, further comprising determining (320) that the number of members of the group (215) exceeds a predetermined value, assigning the members (110) to mutually independent subgroups (215) and carrying out the method (300) on each of the subgroups (215).

9. Method (300) according to one of the preceding claims, wherein a member (110) whose speed of travel exceeds a predetermined value is dismissed from the group (215).

10. Computer program product having program code means for performing the method (300) according to one of the preceding claims when the computer program product runs on a processing device (110, 140) or is stored on a computer-readable data storage medium.

11. Apparatus (105) for navigation for a road user (110) in the area of a traffic hold-up (220), comprising:
- a determination device (115, 140) for determining that the road user (110) is a subscriber to a predetermined service and for assigning the road user (110) to a group (215) of such road users (110) ;
- a capture device (120) for capturing driving information of the road user (110);
- a determination device (115) for determining coordinated driving manoeuvres for the members (110) of the group (215) on the basis of the captured driving information in order to reduce the effects of the traffic hold-up (220) for the members (110) of the group (215); and
- an output device (120, 130) for outputting the driving manoeuvres determined for the road user (110) to the road user (110);
- the driving manoeuvres are determinable such that speeds of travel of the members (110) of the group (215) are able to brought move into line with one another; and
**characterized in that**
the driving manoeuvres are determinable such that distances between the members (110) of the group (215) are reducible to a predetermined maximum distance.

## Revendications

1. Procédé (300) permettant à des usagers de la route (110) de naviguer dans la zone d'une entrave à la circulation (220), le procédé comprenant les étapes suivantes :
- déterminer (310) un groupe (215) d'usagers de la route (110) dans la zone de l'entrave à la circulation (220), lesquels sont des abonnés à un service prédéterminé ;
- détecter (330) des informations de conduite des membres (110) du groupe (215) ;
- déterminer (345) des manoeuvres de conduite des membres (110) du groupe (215) en fonction des informations de conduite détectées ;
- délivrer (350) les manoeuvres de conduite aux membres associés (110) du groupe (215) ;
- les manoeuvres de conduite étant coordonnées pour réduire les effets de l'entrave à la circulation (220) sur les membres (110) du groupe (215) ;
- les manoeuvres de conduite étant déterminées de telle sorte que les vitesses de conduite des membres (110) du groupe (215) sont rapprochées les unes des autres ; et **caractérisé en ce que**
- les manoeuvres de conduite sont déterminées de manière à ce que les distances entre les membres (110) du groupe (215) soient réduites à une distance maximale prédéterminée.

2. Procédé (300) selon l'une des revendications précédentes, le service prédéterminé comprenant un réseau social.

3. Procédé (300) selon la revendication 2, le service prédéterminé comprenant un réseau social de guidage de circulation basé sur un groupe.

4. Procédé (300) selon l'une des revendications précédentes, la détermination (345) des manoeuvres de conduite étant effectuée par un moyen (145) distinct des usagers de la route (110).

5. Procédé (300) selon la revendication 4, les manoeuvres de conduite étant déterminées par un service de déterminaton réparti (145).

6. Procédé (300) selon l'une des revendications précédentes, les manoeuvres de conduite étant déterminées de telle sorte que les membres (110) du groupe (215) sont guidés par la voie de circulation concernée (210) à la manière d'une fermeture à glissière dans la zone d'un rétrécissement de voie de circulation (220).

7. Procédé (300) selon l'une des revendications précédentes, **caractérisé en ce que** l'un des usagers de la route comprend un véhicule automobile et les manoeuvres de conduite sont délivrées de manière à ce que le véhicule automobile amorce automatiquement les manoeuvres de conduite.

8. Procédé (300) selon l'une des revendications précédentes, comprenant en outre la détermination (320) que le nombre de membres du groupe (215) dépasse une valeur prédéterminée, l'association des membres (110) à des sous-groupes indépendants (215), et la mise en oeuvre du procédé (300) sur chacun des sous-groupes (215) .

9. Procédé (300) selon l'une des revendications précédentes, un membre (110) dont la vitesse de conduite dépasse une valeur prédéterminée est exclu du groupe (215).

10. Produit de programme informatique comprenant des moyens de code de programme destinés à mettre en oeuvre le procédé (300) selon l'une des revendications précédentes, lorsque le produit de programme informatique se déroule sur un dispositif de traitement (110, 140) ou est stocké sur un support de données lisible par ordinateur.

11. Dispositif (105) permettant à un usager de la route (110) de naviguer dans la zone d'une entrave à la circulation (220), le dispositif comprenant :
- un moyen de détermination (115, 140) destiné à déterminer que l'usager de la route (110) est abonné à un service prédéterminé et à associer l'usager de la route (110) à un groupe (215) de tels usagers de la route (110) ;
- un moyen de détection (120) destiné à détecter des informations de conduite de l'usager de la route (110) ;
- un moyen de détermination (115) destiné à déterminer des manoeuvres de conduite coordonnées pour les membres (110) du groupe (215) sur la base des informations de conduite détectées pour réduire les effets de l'entrave à la circulation (220) sur les membres (110) du groupe (215) ; et
- un moyen de délivrance (120, 130) destiné à délivrer à l'usager de la route (110) les manoeuvres de conduite, déterminées pour l'usager de la route (110) ;
- les manoeuvres de conduite pouvant être déterminées de manière à ce que les vitesses de conduite des membres (110) du groupe (215) soient proches les unes des autres ; et **caractérisé en ce que** les manoeuvres de conduite peuvent être déterminées de manière à ce que les distances entre les membres (110) du groupe (215) puissent être réduites à une distance maximale prédéterminée.
